# EUROPEAN PATENT SPECIFICATION

(11) **EP 4 340 323 B1**
(45) Date of publication and mention of the grant of the patent: **21.01.2026**
(21) Application number: 22845231.4
(22) Date of filing: 15.07.2022
(51) Int. Cl.: H04L 51/04, H04L 51/214, H04L 51/48, H04L 51/52, H04L 51/046

(54) **MESSAGE SENDING METHOD AND APPARATUS, AND DEVICE AND STORAGE MEDIUM**
VERFAHREN UND VORRICHTUNG ZUM SENDEN VON NACHRICHTEN SOWIE VORRICHTUNG UND SPEICHERMEDIUM
PROCÉDÉ ET APPAREIL D'ENVOI DE MESSAGE, ET DISPOSITIF ET SUPPORT DE STOCKAGE

(30) Priority: 22.07.2021 CN 202110833147
(43) Date of publication of application: 20.03.2024
(73) Proprietor: Beijing Zitiao Network Technology Co., Ltd., Beijing 100190 (CN)
(72) Inventor: JIN, Siyao, Beijing 100086 (CN)
(74) Representative: Marks & Clerk LLP
(86) International application number: PCT/CN2022/105909
(87) International publication number: WO 2023/001066

(56) References cited:
- WO-A1-2019/113452
- CN-A- 109 981 304
- CN-A- 110 231 967
- CN-A- 113 556 279
- US-A1- 2017 068 904

## Description

### TECHNICAL FIELD

The present disclosure relate to a message sending method, an apparatus, a device, and a storage medium.

### BACKGROUND

With the rapid development of the Internet technology, communication between people is becoming more and more convenient.

Many applications have group communication capabilities, and the number of members in a group is usually large.

The patent application with publication number US2017068904A1 provides a method for determining the destination of a communication. In the method, training data is collected describing multiple past messages sent over a computer-implemented communication service. For each of the past messages, the training data set comprises a record of a respective channel of the respective message, and a record of respective feature vector of the respective message, wherein the channel corresponds to a respective one or more recipients to which the respective message was sent, and wherein the feature vector comprises a respective set of values of a plurality of parameters associated with the sending of the respective message. The training data is used to train a machine learning algorithm. By applying the machine learning algorithm to the feature vector of a respective subsequent message, to be sent by a sending user over the computer-implemented communication service, a prediction is generated regarding one or more potential recipients of the subsequent message.

### SUMMARY

The present invention consists of a message sending method such as claimed in appended claim 1.

The present invention also provides a computer-readable storage medium having a computer program stored thereon, wherein the computer program, when executed by a processor, implements the message sending method above.

The present invention further provides an electronic device comprising a memory, a processor, and a computer program stored in the memory and executable on the processor, wherein the processor, when executing the computer program, implements the message sending method above.

### BRIEF DESCRIPTION OF THE DRAWINGS

FIG. 1 is a schematic flowchart of a message sending method provided by an embodiment of the present disclosure;
FIG. 2 is a schematic flowchart of another message sending method provided by an embodiment of the present disclosure;
FIG. 3 is a schematic diagram of a group chat interface provided by an embodiment of the present disclosure;
FIG. 4 is a schematic flowchart of still another message sending method provided by an embodiment of the present disclosure;
FIG. 5 is a block diagram of a structure of a message sending apparatus provided by an embodiment of the present disclosure;
FIG. 6 is a block diagram of a structure of an electronic device provided by an embodiment of the present disclosure.

### DETAILED DESCRIPTION

Below, embodiments of the present disclosure will be described with reference to the drawings. Although some embodiments of the present disclosure are shown in the drawings, the present disclosure can be implemented in various forms, and these embodiments are provided for the purpose of understanding the present disclosure. The accompanying drawings and embodiments of the present disclosure are for illustrative purposes only.

Various steps described in the methods of the embodiments of the present disclosure may be executed in a different order, and/or executed in parallel. In addition, the methods of the embodiments may comprise additional steps and/or some of the illustrated steps may be omitted. The scope of the present disclosure is not limited in this regard.

The term "comprising" and its variants as used herein is an open-ended mode expression, that is, "comprising but not limited to". The term "based on" means "based at least in part on". The term "one embodiment" means "at least one embodiment"; the term "another embodiment" means "at least one additional embodiment"; and the term "some embodiments" means "at least some embodiments". Related definitions of other terms will be given in the following description.

The concepts of "first" and "second" mentioned in the present disclosure are only used to distinguish different devices, modules or units, and are not used to limit the order of functions performed by these devices, modules or units, or interdependence therebetween.

The modifications of "a" and "a plurality of" mentioned in the present disclosure are illustrative and not restrictive, and those skilled in the art should understand that unless clearly indicated in the context, they should be understood as "one or more".

The names of messages or information exchanged between multiple devices in the embodiments of the present disclosure are only used for illustrative purposes, and are not used to limit the scope of these messages or information.

In the following embodiments, each embodiment provides optional features and examples at the same time. The various features recorded in the embodiments can be combined to form multiple alternative solutions. Each numbered embodiment should not be regarded as a standalone technical solution.

In the related art, many applications have group communication capabilities, and the number of members in a group is usually large. When there is a need to a specify message recipient, a user needs to browse through all group members and selects a desired target. This operation process is cumbersome and inefficient. If multiple message recipients need to be specified, the multiple message recipients need to be selected one by one, which makes the operation process more cumbersome and inefficient.

In view of this, the present disclosure provides a message sending method, to improve the efficiency of the interaction in the group.

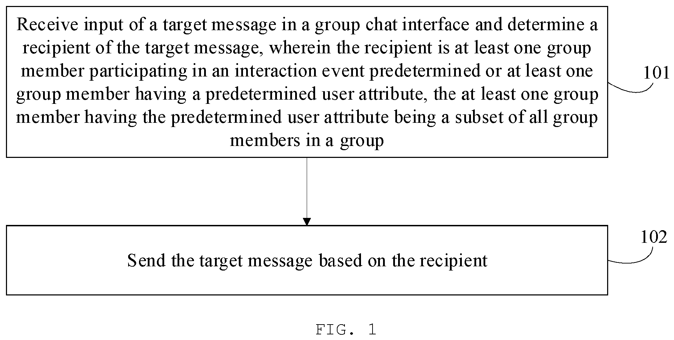

FIG. 1 is a schematic flowchart of a message sending method provided by the invention. The method can be executed by a message sending apparatus, wherein the apparatus can be implemented by software and/or hardware, and can generally be integrated in an electronic device. As shown in FIG. 1, the method comprises the following steps.

In step 101, input of a target message is received in a group chat interface and a recipient of the target message is determined, wherein the recipient is at least one group member participating in an interaction event predetermined or at least one group member having a predetermined user attribute, the at least one group member having the predetermined user attribute being a subset of all group members in a group.

The group comprises at least two group members, that is, at least two users. The group chat interface may be an interface in a preset application, wherein the preset application can provide group chat function. This embodiment has no limitation on the type of the preset application. The preset application can be installed on electronic devices such as mobile phones, tablets, or computers, and a user can register an account and log in to the preset application. Exemplarily, the preset application comprise an instant messaging application, a short video application, a live streaming application, an online conferencing application, etc..

The target message can be understood as a current message to be sent. This embodiment is not limited to the order of precedence between the input of the target message and the determination of the recipient. For example, the input target message can be received first, and then the recipient is determined; or the recipient can be determined first, and then the input of the target message is received.

Exemplarily, there may be multiple forms of interaction events (or activities) in the preset application, wherein the interaction events may occur in a group or may run through the entire preset application. A predetermined interaction event may be one or more of these events. A recipient the user wants to send a message to can be determined based on the predetermined interaction event, thereby avoiding browsing through multiple group members one by one and determine whether they are the desired selected recipients. When there are multiple recipients to be selected, the association between different group members in the group can be determined based on the interaction event. For group members participating in a same interaction event, they may have the same characteristics, that is, they may become message recipients for the same group message, and these group members can be used as the recipients. An event type can be determined based on the characteristic of the preset application, and the embodiment of the present disclosure has no limitation thereto. For example, if a voting function is supported in a group of the preset application, group members who participate in the same voting event or vote on the same option can be selected as the recipients. For another example, if a note function is supported in a group of the preset application, group members participating in the same note event can be used as the recipients. For example, if a resource forwarding function is supported by the preset application, group members who have forwarded the same resource can be used as the recipients.

Exemplarily, group members in a group may have multiple user attributes, a recipient the user wants to send a message to can also be determined based on a predetermined user attribute, thereby avoiding browsing through multiple group members one by one and determine whether they are the desired selected recipients. In addition, some group members in a group may have the same user attributes. When the recipients that need to be selected may be a plurality of recipients, an association between different group members in the group can be determined based on a predetermined user attribute, and group members having the same predetermined user attribute can be selected as the recipients. The at least one group member having the predetermined user attribute is a subset of all group members in the group, that is, the predetermined user attribute here does not comprise user attributes that all group members in the group have. The predetermined user attribute can be specified in advance according to actual needs or dynamically determined based on relevant factors such as the current scenario. For example, the user attribute may comprise a user level, time of joining the group, office location or department, etc., which can generally be determined based on relevant information such as the user's personal introduction or signature that is publicly available in the group.

In step 102, the target message is sent based on the recipient.

The target message is sent to the recipient to achieve batch sending of the target message.

In the message sending method provided in the embodiment of the present disclosure, input of a target message is received in a group chat interface and a recipient of the target message is determined, wherein the recipient is at least one group member participating in an interaction event predetermined or at least one group member having a predetermined user attribute, the at least one group member having the predetermined user attribute being a subset of all group members in a group; and the target message is sent based on the recipient. By adopting the above technical solution, a recipient of the target message can be quickly selected from the group based on a predetermined interaction event or a predetermined user attribute, which is beneficial for improving the efficiency of the interaction in the group. In addition, when recipients that need to be selected may be multiple recipients, multiple group members in the group can be quickly determined in a batch as recipients of the target message based on the interaction event or the user attribute, which can improve the efficiency of the interaction in the group.

In some embodiments, the determining of the recipient of the target message comprises: receiving interaction event information or user attribute information input by a current user; and determining the recipient of the target message based on the interaction event information or the user attribute information. The advantage of this arrangement is that a user can enter information about an interaction event or user attribute to enable the preset application to automatically match a corresponding group member as a recipient, thereby achieving the rapid determination of the recipient.

In some embodiments, the determining of the recipient of the target message comprises: displaying a member combination list in the group chat interface, wherein the member combination list comprises at least one member combination, the member combination comprising a group member participating in a same interaction event or a group member having a same user attribute; determining a target member combination based on a selection operation on the member combination list; and determining the recipient of the target message based on the group member comprised in the target member combination. The number of group members in the member combination is at least one, i.e. it may be one or a plurality. In most cases, the number of group members in the member combination is a plurality. The advantage of this arrangement is that different group members in the group can be aggregated into a member combination based on an event or a user attribute, and displayed in the member combination list for selection by a user. By selecting a member combination, a user can achieve selection of multiple group members in the combination, and thus achieve batch selection of multiple message recipients in a single operation, thereby improving the efficiency of determining message recipients, which is beneficial for improving the efficiency of the interaction in the group.

Exemplarily, when displaying a member combination list, all or some possible member combinations can be displayed in the member combination list for the current user to choose based on actual needs. The embodiment has no limitation on the method of displaying the member combinations. For example, a name of the member combination and/or member identifiers of the group members comprised in the member combination can be displayed. The member identifier can be, for example, a name, a nickname, an avatar, or the like. Optionally, in order to facilitate the current user's selection, the name of the member combination can be named after the corresponding event or user attribute.

The method can further comprise, before displaying the member combination list in the group chat interface: receiving combination arrangement order setting information input by the user; accordingly, displaying the member combination list in the group chat interface based on the combination arrangement order setting information. The advantage of this arrangement is that it allows a user to set the arrangement order of member combinations in the list according to the personal habit. For example, the arrangement order of frequently selected events or user attributes can be placed at the top to help the user quickly find the desired member combination.

Exemplarily, the current user can input a selection operation by touching the screen or using an input device such as a mouse. The selection operation can be a click, long press, or double click operation. When determining a target member combination, the member combination selected by the user can be determined based on an input position of the selection operation, and a selected member combination is determined as the target member combination.

The number of target member combinations is not specifically limited in the embodiment, which may be one or more. As an example, the selection operation can support multiple inputs, and each selection operation can determine one target member combination.

Exemplarily, all group members comprised in the target member combination can be directly determined as the recipients of the target message, which can quickly determine the recipients of the target message.

Optionally, in the case of multiple target member combinations, the recipients of the target message can be determined based on the union set of the group members in the multiple target member combinations, which enables more flexible determination of the recipients of the target message.

Optionally, it is also possible to first display all group members comprised in the target member combination and then receive an adjustment operation input by the current user, the adjustment operation being configured to delete and/or add a group member. For example, the adjustment operation is configured to delete one or more group members from all displayed group members, and can also be configured to add a group member based on all displayed group members. Subsequently, the recipient of the target message is determined based on the adjustment operation. The advantage of this arrangement is that it allows the current user to adjust the recipient of the target message to better match the actual needs of the current user.

In some embodiments, the member combination is the subset of all group members in the group.

In some embodiments, in the case where the member combination list comprises a plurality of member combinations, intersection of group members in different member combinations is allowed. The advantage of this arrangement is that a richer combination can be obtained. In practice, there may be cases where the same group member participates in different events or has different user attributes. Therefore, when combining group members, the same group member can be comprised in different member combinations, making it easier for the current user to choose a member combination more accurately.

In some embodiments, the method further comprises, before displaying the member combination list in the group chat interface: receiving a preset instruction input by a current user, the preset instruction being configured to specify a plurality of recipients for receiving a message. The advantage of this arrangement is that it allows the current user to choose the timing or method of selecting mass sending targets based on actual needs.

Exemplarily, the current user can input a preset character configured to specify a plurality of recipients for receiving a message, such as "@". If it is necessary to distinguish it from the way of specifying a single group member, the preset character can be changed i.e., the preset character is different from a character for specifying a single message recipient. In this case, the preset character can comprises a predefined number of specified characters input consecutively. For example, if the specified character is "@" and the predetermined number is 2, the preset character can be "@ @". For another example, a character representing a plurality or plural meaning, such as "n", can be input before the specified character, which means that the preset character can comprise a combination of a preset plural character and the specified character, for example, the preset character can be "n @".

Exemplarily, the current user can input a preset voice instruction configured to specify a plurality of recipients for receiving a message, for example, the current user can say "group message" by voice. In order to distinguish it from content of a voice input message, the input way of the preset voice instruction can be changed. For example, a specified character, such as "@", can be input first and then a voice input control such as a microphone identifier can be selected, and the voice message input at this time can be regarded as a preset voice instruction.

Optionally, the preset instruction can further comprise an instruction that is generated when a preset control associated with a preset event is triggered. For example, the preset control can be a response button corresponding to the preset event. After the current user triggers the response button, it can be considered that the current user wants to respond to the preset event. In this case, the current user can be considered to input a preset instruction configured to specify a plurality of recipients for receiving a message, and the group member participating in the preset event is assigned to a member combination corresponding to the preset event and displayed in the member combination list. For example, the preset control can be a reply control for a resource publishing reminder event, which is configured to trigger a unified message reply to group members who are involved in the resource publishing reminder event.

In some embodiments, the method further comprises, before displaying the member combination list in the group chat interface: determining group identity information of a current user in the group; and determining the member combination list based on the group identity information. The advantage of this arrangement is that it can determine the member combination list based on the different identity information of the current user in the group, control the number of member combinations in the member combination list, and help the user select a target member combination more quickly. The group identity information can comprise, for example, a group owner, a group administrator, an ordinary group member and the like. For example, for members having different group identities, the need for group messaging to multiple group members may differ. For group identities such as the group owner or the group administrator, more member combinations can be displayed in the member combination list than for the ordinary group member.

In some embodiments, the method further comprises, before displaying the member combination list in the group chat interface: receiving screening condition information input by a current user; and determining the member combination list based on the screening condition information. The advantage of this arrangement is that it allows the user to input the screening condition, to reduce the number of member combinations in the member combination list, and to satisfy the user's expectations and help the user to select a target member combination more quickly.

Exemplarily, a screening condition interface can be displayed, and a plurality of screening conditions can be displayed in the screening condition interface. The current user can input corresponding screening condition information for one or more screening conditions, for example, a screening range can be input. The screening condition can be set based on the characteristic of the preset application, such as a time range of the event occurrence (such as the last 3 days), the object associated with the event (such as the user's published work), or a customized user attribute range (such as joining the group within the last week), and so on.

Exemplarily, it is also possible to receive screening condition information input by the current user via natural language, which can be text or voice. Optionally, a specified character such as "@" can be input, and then text information or voice information is input, wherein the text information or the voice information can be regarded as screening condition information. For example, after the user inputs "@" and then inputs "people who have followed me in the last 3 days". By analyzing the screening condition information, those group members who have followed the current user in the past 3 days are automatically determined, and a member combination is formed and displayed in the member combination list.

In some embodiments, the method further comprises, before displaying the member combination list in the group chat interface: receiving message content to be sent corresponding to the target message input by a current user; analyzing the message content to be sent to obtain a target interaction event and/or a target user attribute; and determining the member combination list based on the target interaction event and/or the target user attribute. The advantage of this arrangement is that it can perform a targeted, automatic analysis of the message content to be sent, and thus quickly display a more accurate member combination list that can meet the current user's expectations.

Exemplarily, there may be many events and various user attributes in the preset application. Therefore, there may be a large number of member combinations, which is not conducive to the current user quickly selecting the target member combination. In the case where the user is allowed to input the message content to be sent first and then the recipient of the message is set, when inputting the message content to be sent, the current user has usually decided in advance which group members the message will be sent to. The message content to be sent is generally directed to a certain point. By analyzing the message content to be sent, a possible related event or user attribute can be analyzed, thereby narrowing the scope of the screening of group members to a certain degree and reducing the number of member combinations in the member combination list to be displayed.

For example, for the voting event in the above example, assuming the current user is the organizer of the voting event, the message content to be sent could be "Thank you for actively participating in the voting on XX, our next arrangement is...". Based on the message content, it can be analyzed that the target event comprises XX voting event, and then the group members participating in the voting event can be grouped into one member combination and displayed in the member combination list.

For another example, assuming that the current user is a resource publisher in the group, other group members can set a resource publishing reminder for the current user, that is, the interaction event is a resource publishing reminder event. When the current user responds to the resource publishing reminder event, the message content to be sent might be "Thanks for your reminder, I will publish new resources as soon as possible". Based on the message content, it can be analyzed that the target event comprises a resource publishing reminder event, and then the group members participating in the resource publishing reminder event can be grouped into one member combination and displayed in the member combination list.

In some embodiments, the method further comprises, before displaying the member combination list in the group chat interface: analyzing historical chat content of a group chat within a preset time period to obtain a target interaction event and/or a target user attribute; and determining the member combination list based on the target interaction event and/or the target user attribute. The advantage of this arrangement is that it can perform a targeted, automatic analysis of the historical chat content and display a more accurate member combination list that can meet the current user's expectations.

Exemplarily, when group members chat in a group, there may be a situation where the speech or discussion is centered around an interaction event or a group of users having the same user attribute. By analyzing historical chat content within a predetermined time period, a possible related interaction event or user attribute can be analyzed, thereby narrowing the scope of the screening of group members to a certain degree and reducing the number of member combinations in the member combination list to be displayed.

In some embodiments, the group chat interface is comprised in a preset application, and the event comprises an event occurring in the preset application. The advantage of this arrangement is that the preset application can have many other functions in addition to the group chat function. In other functions, group members in a group can also create associations or interactions based on some events that are not limited to the events that occur in the group, so that the scope of events can be extended to the entire preset application, making it more convenient to quickly select multiple message recipients based on events within the preset application.

In some embodiments, the interaction event comprises an event that occurs in the group and is associated with a target user in the group. The target user can be the group owner or other group members, which is not specifically limited here.

The preset application comprises a resource publishing application; and the event comprises at least one of: an event that performs a preset interaction operation on the target user; an event that performs a preset interaction operation on a resource published by the target user; or a resource publishing reminder event for the target user. The preset interaction operation can comprise a positive interaction operation, such as giving a like or reward, or comprise other types of interaction operations, which are not limited in the embodiment. The advantage of this arrangement is that, for the resource publishing application, a resource publisher and other users can communicate and exchange ideas in the application. For example, users can express their appreciation or concern for a resource publisher, and users can also express their appreciation or concern for a resource published by the resource publisher. When the resource publisher has not updated the work in a long time, other users can also remind the resource publisher by participating in a resource publishing reminder event. By aggregating group members participating in the above interaction events into different member combinations, the resource publisher can quickly respond to relevant group members, thereby improving interaction efficiency.

Exemplarily, the resource can be information or data in various forms such as images, text, audio, or video, which are not limited in the embodiment. Resources are generally presented in the form of works, such as live videos, short videos, novels, comics and other online resource works. The user can upload the work that need to be published to a server corresponding to the preset application, and the server will send the work to the preset application used by other users for display. Accordingly, the resource publishing application may be, for example, a live streaming application, a short video application, an online novel application, an online comic application, and the like.

In order to facilitate communication between a resource publisher and users who follow the resource publisher (which can be understood as fans of the resource publisher), a group can be created in the preset application, and group members can chat in the group. The creator of the group (i.e. the group owner) can be either the resource publisher or a fan of the resource publisher. The following is a follow-up explanation using the example that the group owner is the resource publisher, and the resource publisher's fans are the group members (hereafter, fans refer to fans in the group and generally do not comprise fans outside the group) . In this case, the group can also be thought of as a fan group.

In some embodiments, the method further comprises: for each preset recipient of recipients, displaying that the recipient of the target message is a current preset recipient in a message receiving interface corresponding to the current preset recipient. The advantage of this arrangement is that the fan can get a sense of targeted response from the group owner, which is beneficial for increasing user stickiness. The preset recipients may comprise all the recipients in the recipients, i.e., for each recipient of recipients, in a message receiving interface corresponding to a current preset recipient, it displays that the recipient of the target message is the current preset recipient.

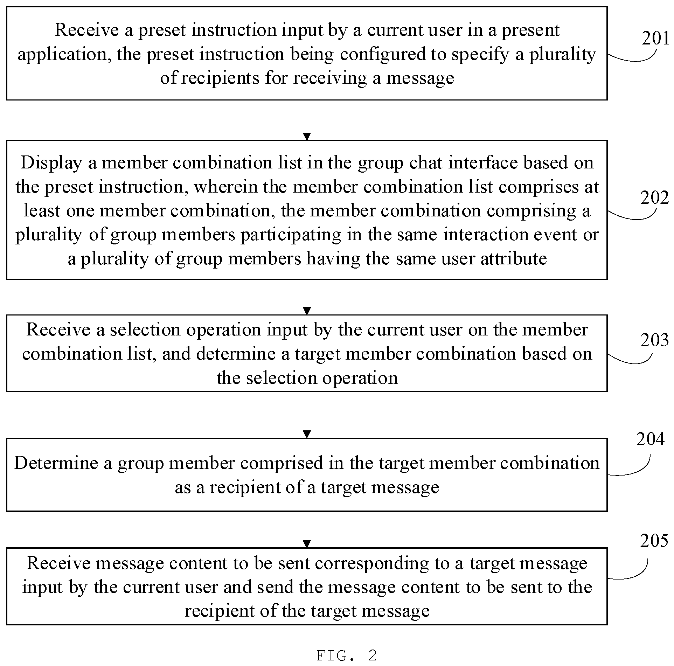

FIG. 2 is a schematic flowchart of another message sending method provided by an embodiment of the present disclosure. The embodiment of the present disclosure will be explained based on the optional solution in the above embodiment. As shown in FIG. 2, the method may further comprise the following steps.

In step 201, a preset instruction input by a current user is received in a present application, the preset instruction being configured to specify a plurality of recipients for receiving a message.

The preset application comprises a resource publishing application. For ease of explanation, the following describes an example in which the resource publishing application is a short video application, the current user is the group owner of a group, or can be considered a short video author.

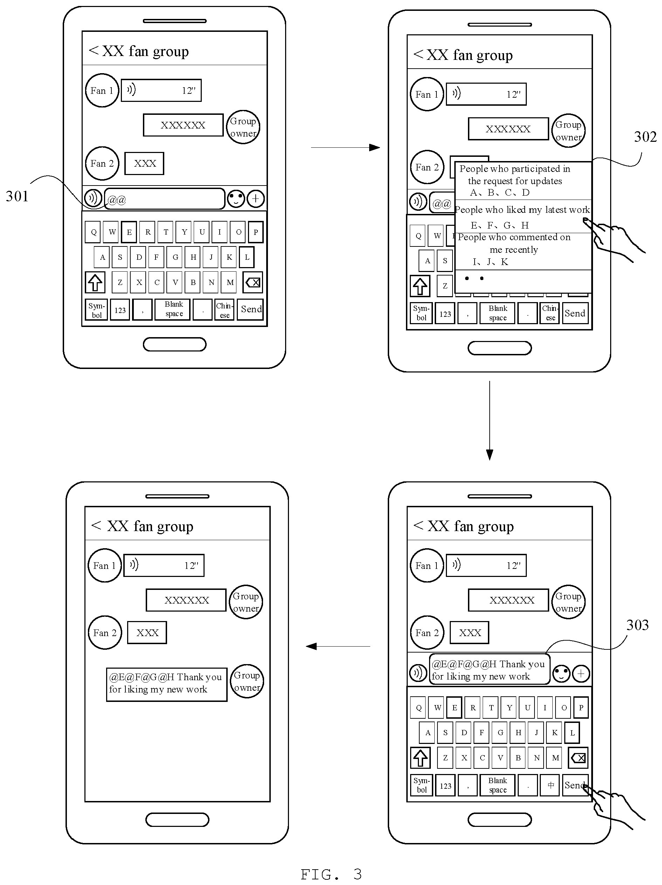

FIG. 3 is a schematic diagram of a group chat interface provided by an embodiment of the present disclosure. As shown in FIG. 3, assuming that the current user can input a preset character 301 for specifying a plurality of message recipients, the preset character 301 may be "@@".

In step 202, a member combination list is displayed in the group chat interface based on the preset instruction, wherein the member combination list comprises at least one member combination, the member combination comprising a plurality of group members participating in the same interaction event or a plurality of group members having the same user attribute.

Exemplarily, the interaction event comprises at least one of: an event for inputting a positive interaction operation on the current user, an event for inputting a positive interaction operation on a resource published by the current user, and a publishing reminder event for a resource of the current user.

The event for inputting a positive interaction operation on the current user can comprise an event for inputting a positive interaction operation on the group owner. A positive interaction operation can be input based on a positive interaction control. The positive interaction control may comprises, for example, a follow control, a like control, a message control, or a recommendation control, etc.. The corresponding event can be referred to as a follow group owner event, a like group owner event, a message group owner event, and a recommendation group owner event, etc..

The event for inputting a positive interaction operation on a resource published by the current user can comprise an event for inputting a positive interaction operation on a short video published by the group owner. Similarly, a positive interaction operation can be input based on a positive interaction control. The positive interaction control may comprises, for example, a follow control, a like control, a comment control, or a forwarding control, etc.. The corresponding event can be referred to as a follow work event, a like work event, a comment work event, and a forwarding work event, etc.. Optionally, since the group owner may have many works, in order to control the number of member combinations, the works may be pre-specified or user-specified, for example, it may be the latest short video published by the group owner.

When a resource publisher has not updated the work in a long time, a user who follow the resource publisher, such as a fan, is usually inclined to urge or remind the resource publisher to update as soon as possible. In this case, there may be a resource publishing reminder event initiated by the fan, and the resource publishing reminder event is supported by other fans, wherein these fans can be referred to as participants in the resource publishing reminder event.

As shown in FIG. 3, after the user inputs "@@", a member combination list that need to be displayed is determined. The member combination list 302 shown in FIG. 3 schematically shows three member combinations, namely "people who participated in the request for updates", "people who liked my latest work", and "people who commented on me recently". A time period corresponding to "recently" can be set by default by the preset application, and the embodiment does not limit this, such as the last 1 day.

In step 203, a selection operation input by the current user on the member combination list is received, and a target member combination is determined based on the selection operation.

Exemplarily, as shown in FIG. 3, if the current user wants to send a message to "people who liked my latest work", the current user can click on a corresponding position to determine a target member combination.

In step 204, a group member comprised in the target member combination is determined as a recipient of a target message.

Exemplarily, as shown in FIG. 3, the target member combination comprises four group members, namely E, F, G, and H. These four group members can be determined as recipients of a target message.

In step 205, message content to be sent corresponding to a target message input by the current user is received and the message content to be sent is sent to the recipient of the target message.

Exemplarily, as shown in FIG. 3, after determining the recipient of the target message, message content 303 to be sent input by the current user, such as "thank you for liking my new work" can be received. After the user completes the input, a sending button can be clicked to send the message content to be sent to E, F, G, and H.

A display way of the message in the group chat interface can be the same or different for the recipients of the message content and other members in the group. For example, if the display way of the message in the group chat interface is the same, it can be the same as the display way of the current user side (i.e., the group owner side), for example, "@" the recipients of the target message; If the display way of the message in the group chat interface is different, for the recipient of the message content, only the recipient of the message content is displayed. For example, for E, "@ E Thank you for liking my new work" can be displayed, which can give the fan a sense of targeted response from the group owner, and is conducive to increase user stickiness. For other group members who are not the recipients of the message, it can be displayed the same as the display way of the current user side (i.e., the group owner side) .

The message sending method provided in the embodiment of the present disclosure can be applied to a resource publishing application. A resource publisher can perform batch message sending in its own fan group. When batch sending is required, a preset instruction can be input, the preset instruction being used to specify a plurality of message recipients. Different member combinations can then be displayed in the group chat interface for selection by the group owner. Different member combinations can correspond to different events or user attributes. The events can be events that occur in the resource publishing application to make it easier for the group owner to quickly select a fan who is associated with the group owner by an interaction event, so that interaction directionality is enhanced and interaction efficiency can be improved. Compared with sending a message to all group members, it can also avoid interference with other unrelated members in the group.

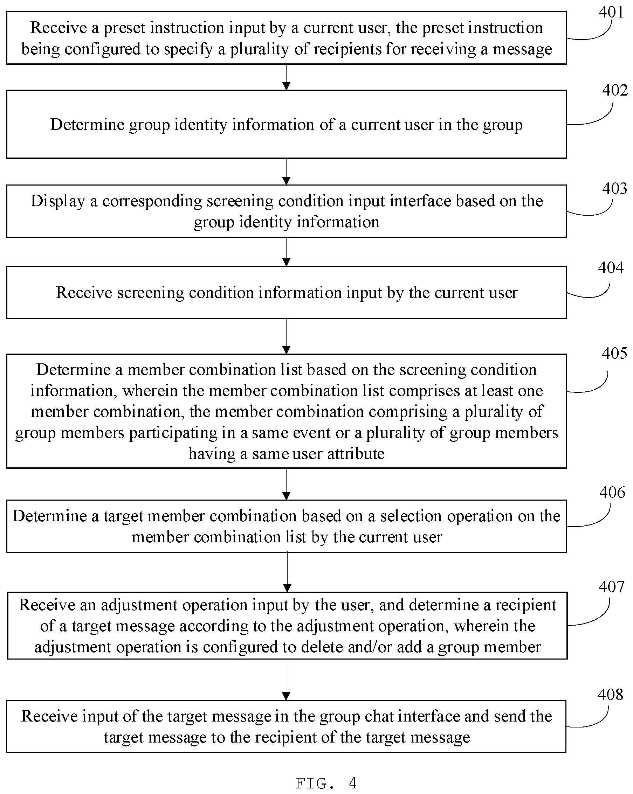

FIG. 4 is a schematic flowchart of still another message sending method provided by an embodiment of the present disclosure. The embodiment of the present disclosure will be explained based on the optional solution in the above embodiment. As shown in FIG. 4, the method may further comprise the following steps.

In step 401, a preset instruction input by a current user is received, the preset instruction being configured to specify a plurality of recipients for receiving a message.

In step 402, group identity information of a current user in the group is determined.

In step 403, a corresponding screening condition input interface is displayed based on the group identity information.

Exemplarily, the screening condition can comprise any one or any combination of: a time period, a work, a fan level, a number of days of following, closeness to the group owner, or time of joining the group. For users with different group identities, the types of screening condition that can be supported may be different. As a result, the screening condition input interface may be different accordingly. In general, more screening condition are supported for a group owner or a group administrator than for an ordinary group member.

In step 404, screening condition information input by the current user is received.

Exemplarily, the screening condition information can be a value of the screening condition, which may be provided as an option for the user to select, or the user can input a value or range of values by himself.

In step 405, a member combination list is determined based on the screening condition information, wherein the member combination list comprises at least one member combination, the member combination comprising a plurality of group members participating in a same event or a plurality of group members having a same user attribute.

In step 406, a target member combination is determined based on a selection operation on the member combination list by the current user.

In step 407, an adjustment operation input by the user is received, and a recipient of a target message is determined according to the adjustment operation, wherein the adjustment operation is configured to delete and/or add a group member.

If the user does not input an adjustment operation, but instead inputs the message content to be sent or triggers a sending control after the message content to be sent is successfully obtained, the member comprised in the target member combination can be directly determined as the recipients of the target message.

In step 408, input of the target message is received in the group chat interface and the target message is sent to the recipient of the target message.

In the message sending method provided in the embodiment of the present disclosure, before the member combination list is displayed, group identity of the current user is first determined, and then the current user is allowed to input screening condition information based on the group identity. Based on the screening condition information, a member combination that the current user may need to select can be more accurately located, which is equivalent to the initial screening of the member combination, thereby effectively reducing the number of member combinations in the member combination list and meeting the user's expectations, to facilitate the user to select a target member combination more quickly, and thereby improve the efficiency of the interaction in the group.

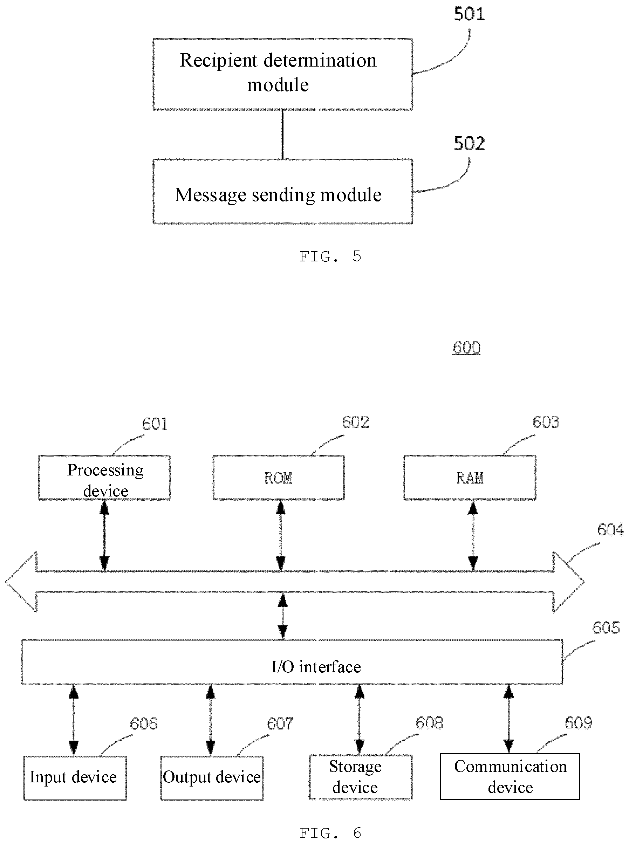

FIG. 5 is a block diagram of a structure of a message sending apparatus provided by an embodiment of the present disclosure. The apparatus can be implemented by software and/or hardware, can generally be integrated into an electronic device, and can send a message by preforming a message sending method. As shown in FIG. 5, the apparatus comprises: a recipient determination module 501 configured to receive input of a target message in a group chat interface and determine a recipient of the target message, wherein the recipient is at least one group member participating in an interaction event predetermined or at least one group member having a predetermined user attribute, the at least one group member having the predetermined user attribute being a subset of all group members in a group; and a message sending module 502 configured to send the target message based on the recipient.

In the message sending apparatus provided in the embodiment of the present disclosure, input of a target message is received in a group chat interface and a recipient of the target message is determined, wherein the recipient is at least one group member participating in an interaction event predetermined or at least one group member having a predetermined user attribute, the at least one group member having the predetermined user attribute being a subset of all group members in a group; and the target message is sent based on the recipient. By adopting the above technical solution, a recipient of the target message can be quickly selected from the group based on a predetermined interaction event or a predetermined user attribute, which is beneficial for improving the efficiency of the interaction in the group.

Optionally, the recipient determination module 501 comprises a message input receiving unit configured to receive the input of the target message in the group chat interface; and further comprises a recipient determination unit configured to receive interaction event information or user attribute information input by the current user, and determine the recipient of the target message based on the interaction event information or the user attribute information.

Optionally, the recipient determination module 501 comprises a message input receiving module configured to receive the input of the target message in the group chat interface; and further comprises: a member combination list display unit configured to displaying a member combination list in the group chat interface, wherein the member combination list comprises at least one member combination, the member combination comprising a group member participating in a same interaction event or a group member having a same user attribute; a target member combination determination unit configured to determine a target member combination based on a selection operation on the member combination list; and a target message recipient determination unit configured to determine the recipient of the target message based on the group member comprised in the target member combination.

Optionally, the member combination is the subset of all group members in the group.

Optionally, the apparatus further comprises: a preset instruction receiving unit configured to receive a preset instruction input by a current user before displaying the member combination list in the group chat interface, the preset instruction being configured to specify a plurality of recipients for receiving a message.

Optionally, the apparatus further comprises: a group identity information determination unit configured to determine group identity information of a current user in the group before displaying the member combination list in the group chat interface; and a first list determination unit configured to determine the member combination list based on the group identity information.

Optionally, the apparatus further comprises: a screening condition information determination unit configured to receive screening condition information input by a current user before displaying the member combination list in the group chat interface; and a second list determination unit configured to determine the member combination list based on the screening condition information.

Optionally, the apparatus further comprises: an analyzing unit configured to analyze historical chat content of a group chat within a preset time period to obtain a target interaction event and/or a target user attribute before displaying the member combination list in the group chat interface; and a third list determination unit configured to determine the member combination list based on the target interaction event and/or the target user attribute.

Optionally, the group chat interface is comprised in a preset application, and the interaction event comprises an event occurring in the preset application.

Optionally, the interaction event comprises an event that occurs in the group and is associated with a target user in the group.

Optionally, the preset application comprises a resource publishing application; and the interaction event comprises at least one of: an event that performs a preset interaction operation on the target user; an event that performs a preset interaction operation on a resource published by the target user; or a resource publishing reminder event for the target user.

Optionally, the apparatus further comprises: a recipient display module configured to, for each preset recipient of recipients, display that the recipient of the target message is a current preset recipient in a message receiving interface corresponding to the current preset recipient.

Referring now to FIG. 6, a structural diagram of an electronic device 600 suitable for implementing the embodiments of the present disclosure is shown. The electronic device 600 of the embodiment of the present disclosure may comprise, but not limited to, a mobile terminal such as a mobile phone, a notebook computer, a digital broadcast receiver, a PDA (Personal Digital Assistant), a PAD (tablet computer), a PMP (Portable Media Player), an on-board terminal (such as an on-board navigation terminal), and a fixed terminal such as a digital television (TV), a desktop computer, or the like. The electronic device 600 shown in FIG. 6 is merely an example and should not impose any limitation on the function and scope of the embodiments of the present disclosure.

As shown in FIG. 6, the electronic device 600 may comprise a processing device (e.g., a central processing unit, a graphics processor) 601, which may perform various appropriate actions and processes according to a program stored in Read Only Memory (ROM) 602 or a program loaded from a storage device 608 into Random Access Memory (RAM) 603. In RAM 603, various programs and data required for the operation of the electronic device 600 are also stored. Processing device 601, ROM 602 and RAM 603 are connected to each other through bus 604. Input/Output (I/O) interface 605 is also connected to bus 604.

Generally, the following devices can be connected to I/O interface 605: an input device 606 comprising, for example, a touch screen, a touch pad, a keyboard, a mouse, a camera, a microphone, an accelerometer, a gyroscope, etc.; an output device 607 comprising, for example, a liquid crystal display (LCD), a speaker, a vibrator, etc.; a storage device 608 comprising, for example, a magnetic tape, a hard disk, etc.; and a communication device 609. The communication device 609 enables the electronic device 600 to communicate in a wireless or wired manner with other devices to exchange data. Although FIG. 6 shows the electronic device 600 with various components, it is not required to implement or have all of these components. Alternatively, more or fewer components can be implemented or provided.

According to an embodiment of the present disclosure, the processes described above with reference to the flowchart can be implemented as a computer software program. For example, an embodiment of the present disclosure comprises a computer program product, which comprises a computer program carried on a non-transitory computer readable medium, and containing program code for executing the method shown in the flowchart. In such an embodiment, the computer program may be downloaded and installed from the network through the communication device 609, or installed from the storage device 608, or from the ROM 602. When the computer program is executed by the processing device 601, the above functions defined in the method of the embodiment of the present disclosure are performed.

The computer readable medium in the present disclosure may be a computer readable signal medium or a computer readable storage medium, or any combination of thereof. The computer readable storage medium can be, for example, but not limited to, an electronic, magnetic, optical, electromagnetic, infrared, or semiconductor system, apparatus, or device, or any combination of the above. More specific examples of the computer readable storage medium may comprise, but are not limited to: electrical connection with one or more wires, portable computer disk, hard disk, RAM, ROM, erasable programmable read-only memory (EPROM or flash memory), fiber optics, portable compact disc Read-only memory (CD-ROM), optical storage device, magnetic storage device, or any suitable combination of the foregoing. In the present disclosure, a computer readable storage medium can be any tangible medium that can contain or store a program, which can be used by or in connection with an instruction execution system, apparatus or device. In the present disclosure, a computer readable signal medium may comprise a data signal that is propagated in the baseband or as part of a carrier, carrying computer readable program code. Such propagated data signals can take a variety of forms comprising, but not limited to, electromagnetic signals, optical signals, or any suitable combination of the foregoing. The computer readable signal medium can also be any computer readable medium other than a computer readable storage medium, which can transmit, propagate, or transport a program for use by or in connection with the instruction execution system, apparatus, or device. Program code embodied on a computer readable medium can be transmitted by any suitable medium, comprising but not limited to wires, optical cables, RF (Radio Frequency), etc., or any suitable combination of the above.

The above computer readable medium may be comprised in the electronic device described above; or it may exist alone without being assembled into the electronic device.

The computer readable medium carries one or more programs that, when executed by the electronic device, cause the electronic device to: receive input of a target message in a group chat interface and determine a recipient of the target message, wherein the recipient is at least one group member participating in an interaction event predetermined or at least one group member having a predetermined user attribute, the at least one group member having the predetermined user attribute being a subset of all group members in a group; and send the target message based on the recipient.

The computer program code for executing operations of the present disclosure may be written by one or more program design languages or combinations thereof, the program design languages comprising, but not limited to, object-oriented program design languages, such as Java, Smalltalk, C++, as well as conventional procedural program design languages, such as "C" program design language or similar program design language. A program code may be completely or partly executed on a user computer, or executed as an independent software package, partly executed on the user computer and partly executed on a remote computer, or completely executed on a remote computer or server. In the circumstance involving the remote computer, the remote computer may be connected to the user computer through various kinds of networks, comprising local area network (LAN) or wide area network (WAN), or connected to external computer (for example, through an Internet connection provided by an Internet service provider).

The flowcharts and block diagrams in the accompanying drawings illustrate the architecture, functionality, and operation of some possible implementations of systems, methods, and computer program products according to various embodiments of the present disclosure. In this regard, each block in the flowchart or block diagrams may represent a module, segment, or portion of code, which comprises one or more executable instructions for implementing the specified logical functions. It should also be noted that, in some alternative implementations, the functions noted in the block may occur out of the order noted in the accompanying drawings. For example, two blocks shown in succession may be executed substantially in parallel, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or operations, or combinations of special purpose hardware and computer instructions.

The modules involved in the embodiments described in the present disclosure can be implemented in software or hardware. The name of a module does not constitute a limitation of the module itself under certain circumstances, for example, a message sending module may also be described as "a module for sending the target message based on the recipient".

The functions described above may be performed at least in part by one or more hardware logic components. For example, without limitation, exemplary types of hardware logic components that can be used comprise: Field Programmable Gate Array (FPGA), Application Specific Integrated Circuit (ASIC), Application Specific Standard Product (ASSP), System on Chip (SOC), Complex Programmable Logic Device (CPLD), or the like.

In the context of the present disclosure, a machine-readable medium may be a tangible medium, which may contain or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of thereof. More specific examples of the machine-readable storage medium may comprise electrical connection with one or more wires, portable computer disk, hard disk, RAM, ROM, EPROM or flash, fiber optics, CD-ROM, optical storage device, magnetic storage device, or any suitable combination of the foregoing.

According to one or more examples of the present disclosure, a message sending method is provided, comprising: receiving input of a target message in a group chat interface and determining a recipient of the target message, wherein the recipient is at least one group member participating in an interaction event predetermined or at least one group member having a predetermined user attribute, the at least one group member having the predetermined user attribute being a subset of all group members in a group; and sending the target message based on the recipient.

In an example, the determining of the recipient of the target message comprises: receiving interaction event information or user attribute information input by a current user; and determining the recipient of the target message based on the interaction event information or the user attribute information.

In an examples, the determining of the recipient of the target message comprises: displaying a member combination list in the group chat interface, wherein the member combination list comprises at least one member combination, the member combination comprising a group member participating in a same interaction event or a group member having a same user attribute; determining a target member combination based on a selection operation on the member combination list; and determining the recipient of the target message based on the group member comprised in the target member combination.

In some examples, the member combination is the subset of all group members in the group.

In an example, the method further comprises, before displaying the member combination list in the group chat interface: receiving a preset instruction input by a current user, the preset instruction being configured to specify a plurality of recipients for receiving a message.

In an example, the method further comprises, before displaying the member combination list in the group chat interface: determining group identity information of a current user in the group; and determining the member combination list based on the group identity information.

In an example, the method further comprises, before displaying the member combination list in the group chat interface: receiving screening condition information input by a current user; and determining the member combination list based on the screening condition information.

In an example, the method further comprises, before displaying the member combination list in the group chat interface: analyzing historical chat content of a group chat within a preset time period to obtain a target interaction event and/or a target user attribute; and determining the member combination list based on the target interaction event and/or the target user attribute.

In an example, the group chat interface is comprised in a preset application, and the interaction event comprises an event occurring in the preset application.

In an embodiment, the interaction event comprises an event that occurs in the group and is associated with a target user in the group.

In an example, the preset application comprises a resource publishing application; and the interaction event comprises at least one of: an event that performs a preset interaction operation on the target user; an event that performs a preset interaction operation on a resource published by the target user; or a resource publishing reminder event for the target user.

In an example, the method further comprises: for each preset recipient of recipients, displaying that the recipient of the target message is a current preset recipient in a message receiving interface corresponding to the current preset recipient.

According to one or more examples of the present disclosure, a message sending apparatus is provided, comprising: a recipient determination module configured to receive input of a target message in a group chat interface and determine a recipient of the target message, wherein the recipient is at least one group member participating in an interaction event predetermined or at least one group member having a predetermined user attribute, the at least one group member having the predetermined user attribute being a subset of all group members in a group; and a message sending module configured to send the target message based on the recipient.

In addition, although the operations are depicted in a specific order, this should not be understood as requiring these operations to be performed in the specific order shown or performed in a sequential order. Under certain circumstances, multitasking and parallel processing may be advantageous. Likewise, although several specific implementation details are comprised in the above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

## Claims

1. A message sending method, comprising:
receiving input of a target message in a group chat interface wherein the group comprises at least two members and determining a recipient of the target message, wherein the target message is a message to be sent, and the recipient is at least one group member participating in an interaction event predetermined, the at least one group member being a subset of all group members in said group (101), wherein the interaction event comprises at least one of: an event that performs a preset interaction operation on a resource posted by a target user, or a resource posting reminder event for a target user, wherein target user is the group owner or other group members; and
sending the target message to the recipient (102).

2. The message sending method according to claim 1, wherein the determining of the recipient of the target message comprises:
receiving interaction event information input by a current user; and
determining the recipient of the target message based on the interaction event information.

3. The message sending method according to claim 1, wherein the determining of the recipient of the target message comprises:
displaying a member combination list in the group chat interface, wherein the member combination list comprises at least one member combination, a member combination of the at least one member combination comprising a group member participating in a same interaction event;
determining a target member combination based on a selection operation on the member combination list (203 or 406); and
determining the recipient of the target message based on the group member comprised in the target member combination (204).

4. The message sending method according to claim 3, wherein the member combination is the subset of all group members in the group.

5. The message sending method according to claim 3, further comprising, before displaying the member combination list in the group chat interface:
receiving a preset instruction input by a current user, the preset instruction being configured to specify a plurality of recipients for receiving a message (201).

6. The message sending method according to claim 3, further comprising, before displaying the member combination list in the group chat interface:
determining group identity information of a current user in the group (402); and
determining the member combination list based on the group identity information.

7. The message sending method according to claim 3, further comprising, before displaying the member combination list in the group chat interface:
receiving screening condition information input by a current user (404); and
determining the member combination list based on the screening condition information (405).

8. The message sending method according to claim 3, further comprising, before displaying the member combination list in the group chat interface:
analyzing historical chat content of a group chat within a preset time period to obtain a target interaction event; and
determining the member combination list based on the target interaction event.

9. The message sending method according to any one of claims 1 to 8, wherein the group chat interface is comprised in a preset application, and the interaction event comprises an event occurring in the preset application.

10. The message sending method according to claim 9, wherein the interaction event comprises an event that occurs in the group and is associated with the target user in the group.

11. The message sending method according to claim 10, wherein:
the preset application comprises a resource publishing application.

12. The message sending method according to any one of claims 1 to 11, further comprising:
for each preset recipient of recipients, displaying that the recipient of the target message is a current preset recipient in a message receiving interface corresponding to the current preset recipient.

13. An electronic device (600), comprising a memory (602, 603 or 608) and a processor (601), wherein a computer program executable on the processor is stored in the memory, and the processor, when executing the computer program, implements the message sending method according to any one of claims 1 to 12.

14. A computer-readable storage medium having a computer program stored thereon, wherein the computer program, when executed by a processor, implements the message sending method according to any one of claims 1 to 12.

## Patentansprüche

1. Nachrichtensendeverfahren, umfassend:
Empfangen einer Eingabe einer Zielnachricht in einer Gruppenchat-Schnittstelle, wobei die Gruppe mindestens zwei Mitglieder umfasst, und
Ermitteln eines Empfängers der Zielnachricht, wobei die Zielnachricht eine zu sendende Nachricht ist und der Empfänger mindestens ein Gruppenmitglied ist, das an einem Interaktionsereignis vorbestimmt teilnimmt, wobei das mindestens eine Gruppenmitglied eine Teilmenge aller Gruppenmitglieder in der Gruppe (101) ist, wobei das Interaktionsereignis mindestens eines von Folgendem umfasst: ein Ereignis, das eine voreingestellte Interaktionsoperation an einer von einem Zielbenutzer versendeten Ressource durchführt, oder eine Ressource, die Erinnerungsereignis für einen Zielbenutzer versendet, wobei der Zielbenutzer der Gruppeninhaber oder andere Gruppenmitglieder ist; und
Senden der Zielnachricht an den Empfänger (102).

2. Nachrichtensendeverfahren nach Anspruch 1, wobei das Ermitteln des Empfängers der Zielnachricht umfasst:
Empfangen von Interaktionsereignisinformationen, die von einem aktuellen Benutzer eingegeben werden; und
Ermitteln des Empfängers der Zielnachricht auf Grundlage der Interaktionsereignisinformationen.

3. Nachrichtensendeverfahren nach Anspruch 1, wobei das Ermitteln des Empfängers der Zielnachricht umfasst:
Anzeigen einer Mitgliederkombinationsliste in der Gruppenchat-Schnittstelle, wobei die Mitgliederkombinationsliste mindestens eine Mitgliederkombination umfasst, wobei eine Mitgliederkombination von der mindestens einen Mitgliederkombination ein Gruppenmitglied umfasst, das an einem selben Interaktionsereignis teilnimmt;
Ermitteln einer Zielmitgliedskombination auf Grundlage einer Auswahloperation an der Mitgliedskombinationsliste (203 oder 406); und
Ermitteln des Empfängers der Zielnachricht auf Grundlage des Gremienmitglieds, das in der Zielmitgliederkombination umfasst ist (204).

4. Nachrichtensendeverfahren nach Anspruch 3, wobei die Mitgliederkombination die Teilmenge aller Gruppenmitglieder in der Gruppe ist.

5. Nachrichtensendeverfahren nach Anspruch 3, das vor dem Anzeigen der Mitgliederkombinationsliste in der Gruppenchat-Schnittstelle weiter umfasst:
Empfangen einer voreingestellten Anweisung, die durch einen aktuellen Benutzer eingegeben wird, wobei die voreingestellte Anweisung konfiguriert ist, eine Vielzahl von Empfängern für den Empfang einer Nachricht anzugeben (201).

6. Nachrichtensendeverfahren nach Anspruch 3, das vor dem Anzeigen der Mitgliederkombinationsliste in der Gruppenchat-Schnittstelle weiter umfasst:
Ermitteln von Gruppenidentitätsinformationen eines aktuellen Benutzers in der Gruppe (402); und
Ermitteln der Mitgliederkombinationsliste auf Grundlage der Gruppenidentitätsinformationen.

7. Nachrichtensendeverfahren nach Anspruch 3, das vor dem Anzeigen der Mitgliederkombinationsliste in der Gruppenchat-Schnittstelle weiter umfasst:
Empfangen von Screening-Bedingungsinformationen, die von einem aktuellen Benutzer eingegeben werden (404); und
Ermitteln der Mitgliederkombinationsliste auf Grundlage der Screening-Bedingungsinformationen (405).

8. Nachrichtensendeverfahren nach Anspruch 3, das vor dem Anzeigen der Mitgliederkombinationsliste in der Gruppenchat-Schnittstelle weiter umfasst:
Analysieren eines historischen Chatverlaufs eines Gruppenchats innerhalb eines vordefinierten Zeitraums, um ein Zielinteraktionsereignis zu erhalten; und
Ermitteln der Mitgliederkombinationsliste auf Grundlage des Zielinteraktionsereignisses.

9. Nachrichtensendeverfahren nach einem der Ansprüche 1 bis 8, wobei die Gruppenchat-Schnittstelle in einer vordefinierten Anwendung umfasst ist und das Interaktionsereignis ein Ereignis umfasst, das in der vordefinierten Anwendung auftritt.

10. Nachrichtensendeverfahren nach Anspruch 9, wobei das Interaktionsereignis ein Ereignis umfasst, das in der Gruppe auftritt und mit dem Zielbenutzer in der Gruppe verknüpft ist.

11. Nachrichtensendeverfahren nach Anspruch 10, wobei:
die voreingestellte Anwendung eine Anwendung zur Ressourcenveröffentlichung umfasst.

12. Nachrichtensendeverfahren nach einem der Ansprüche 1 bis 11, weiter umfassend:
für jeden voreingestellten Empfänger von Empfängern, Anzeigen, dass der Empfänger der Zielnachricht ein aktueller voreingestellter Empfänger in einer dem voreingestellten Empfänger entsprechenden Nachrichtenempfangsschnittstelle ist.

13. Elektronische Vorrichtung (600), umfassend einen Speicher (602, 603 oder 608) und einen Prozessor (601), wobei ein auf dem Prozessor ausführbares Computerprogramm im Speicher gespeichert ist und der Prozessor, wenn er das Computerprogramm ausführt, das Nachrichtensendeverfahren nach einem der Ansprüche 1 bis 12 umsetzt.

14. Computerlesbares Speichermedium, auf dem ein Computerprogramm gespeichert ist, wobei das Computerprogramm, wenn es von einem Prozessor ausgeführt wird, das Nachrichtensendeverfahren nach einem der Ansprüche 1 bis 12 umsetzt.

## Revendications

1. Procédé d'envoi de messages, comprenant :
la réception d'un message cible dans une interface de discussion de groupe dans lequel le groupe comprend au moins deux membres, et
la détermination du destinataire du message cible, dans lequel le message cible est un message à envoyer, et le destinataire est au moins un membre du groupe participant à un événement d'interaction prédéterminé, ledit au moins un membre du groupe étant un sous-ensemble de tous les membres dudit groupe (101), dans lequel l'événement d'interaction comprend au moins un des éléments suivants : un événement qui effectue une opération d'interaction prédéfinie sur une ressource publiée par un utilisateur cible, ou un événement de rappel de publication de ressource pour un utilisateur cible, cet utilisateur cible étant le propriétaire du groupe ou un autre membre du groupe ; et
l'envoi du message cible au destinataire (102).

2. Procédé d'envoi de messages selon la revendication 1, dans lequel la détermination du destinataire du message cible comprend :
la réception des informations relatives aux événements d'interaction saisies par l'utilisateur actuel ; et
la détermination du destinataire du message cible en fonction des informations relatives à l'événement d'interaction.

3. Procédé d'envoi de messages selon la revendication 1, dans lequel la détermination du destinataire du message cible comprend :
l'affichage d'une liste de combinaisons de membres dans l'interface de discussion de groupe, dans lequel la liste de combinaisons de membres comprend au moins une combinaison de membres, une combinaison de membres de l'au moins une combinaison de membres comprenant un membre du groupe participant à un même événement d'interaction ;
la détermination d'une combinaison de membres cible en fonction d'une opération de sélection sur la liste des combinaisons de membres (203 ou 406) ; et
la détermination du destinataire du message cible en fonction du membre du groupe inclus dans la combinaison de membres cibles (204).

4. Procédé d'envoi de messages selon la revendication 3, dans lequel la combinaison de membres est le sous-ensemble de tous les membres du groupe.

5. Procédé d'envoi de messages selon la revendication 3, comprenant en outre, avant l'affichage de la liste des combinaisons de membres dans l'interface de discussion de groupe :
la réception d'une instruction prédéfinie saisie par un utilisateur actuel, l'instruction prédéfinie étant configurée pour spécifier une pluralité de destinataires pour recevoir un message (201).

6. Procédé d'envoi de messages selon la revendication 3, comprenant en outre, avant l'affichage de la liste des combinaisons de membres dans l'interface de discussion de groupe :
la détermination des informations d'identité de groupe d'un utilisateur actuel du groupe (402) ; et
la détermination de la liste des combinaisons de membres en fonction des informations d'identité du groupe.

7. Procédé d'envoi de messages selon la revendication 3, comprenant en outre, avant l'affichage de la liste des combinaisons de membres dans l'interface de discussion de groupe :
la réception des informations sur les conditions de filtrage saisies par l'utilisateur actuel (404) ; et
la détermination de la liste de combinaisons de membres en fonction des informations sur les conditions de filtrage (405).

8. Procédé d'envoi de messages selon la revendication 3, comprenant en outre, avant l'affichage de la liste des combinaisons de membres dans l'interface de discussion de groupe :
l'analyse du contenu historique des conversations d'un groupe de discussion sur une période prédéfinie afin d'obtenir un événement d'interaction cible ; et
la détermination de la liste des combinaisons de membres en fonction de l'événement d'interaction cible.

9. Procédé d'envoi de messages selon l'une quelconque des revendications 1 à 8, dans lequel l'interface de discussion de groupe est comprise dans une application prédéfinie, et l'événement d'interaction comprend un événement se produisant dans l'application prédéfinie.

10. Procédé d'envoi de messages selon la revendication 9, dans lequel l'événement d'interaction comprend un événement qui se produit dans le groupe et est associé à l'utilisateur cible dans le groupe.

11. Procédé d'envoi de messages selon la revendication 10, dans lequel :
l'application prédéfinie comprend une application de publication de ressources.

12. Procédé d'envoi de messages selon l'une quelconque des revendications 1 à 11, comprenant en outre :
pour chaque destinataire prédéfini, l'affichage que le destinataire du message cible est un destinataire prédéfini actuel dans une interface de réception de messages correspondant au destinataire prédéfini actuel.

13. Dispositif électronique (600), comprenant une mémoire (602, 603 ou 608) et un processeur (601), dans lequel un programme informatique exécutable sur le processeur est stocké dans la mémoire, et le processeur, lors de l'exécution du programme informatique, met en œuvre le procédé d'envoi de messages selon l'une quelconque des revendications 1 à 12.

14. Support de stockage lisible par ordinateur comportant un programme informatique stocké sur celui-ci, dans lequel le programme informatique, lorsqu'il est exécuté par un processeur, met en œuvre le procédé d'envoi de messages selon l'une quelconque des revendications 1 à 12.
